# EUROPEAN PATENT APPLICATION

(11) **EP 3 226 599 A1**
(43) Date of publication of application: **04.10.2017**
(21) Application number: 15863814.8
(22) Date of filing: 29.10.2015
(51) Int. Cl.: H04W 16/14

(54) **DRB MAPPING METHOD AND APPARATUS**

(30) Priority: 25.11.2014 CN 201410690347
(71) Applicant: China Academy of Telecommunications Technology, Hai Dian District Beijing 100191 (CN)
(72) Inventor: WANG, Yan, Beijing 100191 (CN); BAO, Wei, Beijing 100191 (CN); XU, Fangli, Beijing 100191 (CN)
(74) Representative: Nony
(86) International application number: PCT/CN2015/093238
(87) International publication number: WO 2016/082652

(57) **Abstract**

Disclosed are a DRB mapping method and apparatus. The method in the embodiments of the present invention comprises: a network device and a terminal determining a DRB mapping manner, wherein the DRB mapping manner refers to whether a DRB is allowed to be mapped onto a licensed frequency band carrier and/or is allowed to be mapped onto an unlicensed frequency band carrier; and the network device and the terminal sending service data of the DRB on a designated carrier according to the determined DRB mapping manner. The embodiments of the present invention enable service data having certain requirements for the service quality (such as a VOIP service, or an online video game, etc.) not to be sent on an unlicensed frequency band carrier, thereby avoiding a service delay increase caused by the discontinuous work of the unlicensed frequency band carrier and a service quality reduction caused by time delay shaking, such that the service experience of a user can be effectively improved.

## Description

This application claims priority to Chinese Patent Application No. 201410690347.3, titled DRB mapping method and apparatus, filed with the Chinese Patent Office on November 25, 2014. The entire disclosure of the above application is incorporated herein by reference.

### FIELD

The present disclosure relates to the field of communication technology, and particularly to a DRB mapping method and apparatus.

### BACKGROUND

As the technology of Long Term Evolution (LTE) system is widely used, and the number of global LTE mobile network users is growing rapidly, usable licensed spectrum resources for LTE system are becoming scarce. With the continuing growth of mobile data traffic, the existing licensed spectrum resources are gradually unable to fully meet the needs of users, therefore, it is being considered to perform transmission deployment of LTE system on unlicensed spectrum resources.

LTE-Unlicensed (LTE-U) is a technology providing LTE services based on unlicensed spectrum. At present, there are a variety of wireless communication technologies operating in unlicensed spectrum, such as Wi-Fi and Bluetooth. When LTE utilizes an unlicensed band, it needs to share the band with other wireless communication technologies in a time-division manner. In addition, LTE networks of different operators may utilize a same unlicensed band, which would inevitably cause strong interference.

At present, there is no such a solution where data transmission is deployed on unlicensed spectrum resources.

### SUMMARY

Embodiments of the disclosure provide a DRB mapping method and apparatus, in order to deploy data transmission on unlicensed spectrum resources.

A data radio bearer (DRB) mapping method according to embodiments of the present disclosure, the method includes:
determining, by a network device, a DRB mapping manner, wherein the DRB mapping manner refers to whether a DRB is allowed to be mapped onto a licensed frequency band carrier and/or whether a DRB is allowed to be mapped onto an unlicensed frequency band carrier; and
sending, by the network device, service data of the DRB on a designated carrier according to determined DRB mapping manner.

Optionally, DRB mapping manners include a first mapping manner and a second mapping manner, where
in the first mapping manner, the DRB is only allowed to be mapped onto a licensed frequency band; and
in the second mapping manner, the DRB is allowed to be mapped onto a licensed frequency band, and onto an unlicensed frequency band.

Optionally, the determining, by the network device, a DRB mapping manner, includes:
determining, by the network device, a DRB mapping manner according to a quality of service (QoS) feature and/or a radio link control (RLC) transmission mode of the DRB; or
following, by the network device, a pre-agreed DRB mapping manner.

Optionally, determining, by the network device, a DRB mapping manner according to the RLC transmission mode, includes:
if the RLC transmission mode of the DRB is a Unacknowledged Mode (UM), determining that the DRB is only allowed to be mapped onto a licensed frequency band carrier; and
if the RLC transmission mode of the DRB is an Acknowledged Mode (AM), determining that the DRB is allowed to be mapped onto a licensed frequency band carrier and is allowed to be mapped onto an unlicensed frequency band carrier.

Optionally, the determining, by the network device, a DRB mapping manner, comprises one or a combination of the following:
when a DRB is being established, determining, by the network device, the mapping manner of established DRB, according to a quality of service (QoS) feature and/or a radio link control (RLC) transmission mode of the DRB;
after a DRB has been established, re-determining and configuring, by the network device, the mapping manner of the established DRB, according to a signal interference and/or a reception of transmission service; and
receiving, by the network device acting as a switching target network device, a DRB mapping manner information of a switching terminal from a source network device, and re-determining and configuring, by the target network device, the DRB mapping manner of the switching terminal.

Optionally, after the determining, by network device, a DRB mapping manner, the method further includes:
indicating, by the network device, the mapping manner of the DRB for a terminal which has established the DRB.

Optionally, the network device indicates the mapping manner of the DRB via radio resource control (RRC) signaling for a terminal which has established the DRB; where
the RRC signaling includes a first DRB list and a second DRB list, where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, after determining, by the network device, a DRB mapping manner, the method further includes:
receiving, by the network device, a buffer status report (BSR) reported by a terminal, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR reported by the terminal indicates a category of the BSR, wherein the category of BSR comprise a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB which is allowed to be mapped onto a licensed frequency band carrier and onto an unlicensed frequency band carrier.

Another data radio bearer (DRB) mapping method according to the present disclosure, the method includes:
determining, by a terminal, a DRB mapping manner, wherein the DRB mapping manner refers to whether a DRB is allowed to be mapped onto a licensed frequency band carrier and/or is allowed to be mapped onto an unlicensed frequency band carrier; and
transmitting, by the terminal, service data of the DRB on a designated carrier according to determined DRB mapping manner.

Optionally, DRB mapping manners include a first mapping manner and a second mapping manner; where
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

Optionally, the determining, by the terminal, a DRB mapping manner, includes:
determining, by the terminal, the DRB mapping manner according to indication information transmitted by a network device, wherein the indication information indicate the DRB mapping manner of the terminal, or,
following, by the terminal, a pre-agreed DRB mapping manner.

Optionally, the indication information is received via radio resource control (RRC) signaling; where
the RRC signaling includes a first DRB list and a second DRB list; where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the determining, by the terminal, the DRB mapping manner according to indication information transmitted by a network device, includes one or a combination of the following:
when the DRB is being established, receiving, by the terminal, a first indication information from the network device, and determining, by the terminal, the DRB mapping manner according to the first indication information, wherein the first indication information indicates the DRB mapping manner of the terminal;
after the DRB has been established, receiving, by the terminal, a second indication information from the network device and determining, by the terminal, the DRB mapping manner according to the second indication information, wherein the second indication information indicates the DRB mapping manner which is reconfigured for the terminal by the network device; and
after the terminal has switched to a target network device, receiving, by the terminal, a third indication information sent by the target network device and determining, by the terminal, the DRB mapping manner according to the third indication information, wherein the third DRB mapping manner indicates the DRB mapping manner which is reconfigured by the target network device for the terminal.

Optionally, after the determining, by the terminal, a DRB mapping manner, the method further includes:
sending, by the terminal, a buffer status report (BSR) to a network device, wherein the BSR carries an amount of data to be transmitted of the DRB, and the DRBs corresponding to all logic channels of a logical channel group have the same or different mapping manners;
if the DRBs corresponding to logical channels of a logical channel group have different mapping manners, then the BSR sent by the terminal indicates a category of the BSR, wherein the category of the BSR comprises a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB allowed to be mapped onto a licensed frequency band carrier and onto an unlicensed frequency band carrier.

Optionally, after the determining, by the terminal, a DRB mapping manner, the method further includes:
determining, by the terminal a priority of the logical channel corresponding to the DRB; and
allocating, by the terminal, resources for the logical channel corresponding to the DRB according to the priority, wherein if the logical channel corresponding to the DRB is allowed to be mapped onto a licensed frequency band carrier and an unlicensed frequency band carrier, then unlicensed frequency carrier resources is given preference to be allocated to the DRB.

A network device according to embodiments of the present disclosure, the network device includes:
a processing module, configured to determine a DRB mapping manner, where the DRB mapping manner refers to whether a DRB is allowed to be mapped onto a licensed frequency band carrier and/or whether a DRB is allowed to be mapped onto an unlicensed frequency band carrier; and
a transmitting module, configured to send service data of the DRB on a designated carrier according to the determined DRB mapping manner.

Optionally, DRB mapping manners include a first mapping manner and a second mapping manner, where
in the first mapping manner, the DRB is only allowed to be mapped onto a licensed frequency band; and
in the second mapping manner, the DRB is allowed to be mapped onto a licensed frequency band, and onto an unlicensed frequency band as well.

Optionally, the processing module is further configured to:
determine a DRB mapping manner according to a quality of service (QoS) feature and/or a radio link control (RLC) transmission mode of the DRB; or
follow a pre-agreed DRB mapping manner.

Optionally, the processing module is further configured to:
if the RLC mode of the DRB is a Unacknowledged Mode (UM), determine that the DRB is only allowed to be mapped onto a licensed frequency band carrier; and
if the RLC mode of the DRB is an Acknowledged Mode (AM), determine that the DRB is allowed to be mapped onto a licensed frequency band carrier and is allowed to be mapped onto an unlicensed frequency band carrier.

Optionally, the processing module is further configured to:
when the DRB is being established, determine the mapping manner of established DRB, according to a quality of service (QoS) feature and/or a radio link control (RLC) transmission mode of the DRB;
after the DRB has been established, re-determine and configure the mapping manner of the established DRB, according to a signal interference and/or a reception of transmission service; and
when the network device is used as a switching target network device, re-determine and configure the DRB mapping manner of a switching terminal.

Optionally, the processing module is further configured to:
indicate the mapping manner of the DRB for a terminal which has established the DRB.

Optionally, the processing module is further configured to:
indicate the mapping manner of the DRB via a radio resource control (RRC) signaling for a terminal which has established the DRB; where
the RRC signaling includes a first DRB list and a second DRB list, where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the network device further includes:
a receiving module, configured to receive a buffer status report (BSR) sent by a terminal, where the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprise a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB allowed to be mapped onto a licensed frequency band carrier and onto an unlicensed frequency band carrier.

A terminal according to embodiments of the disclosure, the terminal includes:
a processing module, configured to determine a DRB mapping manner, where the DRB mapping manner refers to whether a DRB is allowed to be mapped onto a licensed frequency band carrier and/or is allowed to be mapped onto an unlicensed frequency band carrier; and
a transmitting module, configured to transmit service data of the DRB on a designated carrier according to the determined DRB mapping manner.

Optionally, DRB mapping manners include a first mapping manner and a second mapping manner; where
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

Optionally, the processing module is further configured to:
determine the DRB mapping manner according to indication information transmitted by a network device, where the indication information indicate the DRB mapping manner of the terminal, or,
follow a pre-agreed DRB mapping manner.

Optionally, the terminal further includes:
a receiving module, configured to receive the indication information via a radio resource control (RRC) signaling; where
the RRC signaling includes a first DRB list and a second DRB list; where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the processing module is further configured to:
when the DRB is being established, determine the DRB mapping manner according to a first indication information sent by the network device, where the first indication information indicates the DRB mapping manner of the terminal;
after the DRB has been established, determine the DRB mapping manner according to a second indication information sent by the network device, where the second indication information indicates the DRB mapping manner which is reconfigured for the terminal by the network device; and
after the terminal has switched to a target network device, determine the DRB mapping manner according to a third indication information sent by the target network device, where the third DRB mapping manner indicates the DRB mapping manner which is reconfigured by the target network device for the terminal.

Optionally, the transmitting module is further configured to:
send a buffer status report (BSR) to a network device, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprises a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB allowed to be mapped onto a licensed frequency band carrier and onto an unlicensed frequency band carrier.

Optionally, the processing module is further configured to:
determine a priority of the logical channel corresponding to the DRB; and
allocate resources for the logical channel corresponding to the DRB according to the priority, where if the logical channel corresponding to the DRB is allowed to be mapped onto both a licensed frequency band carrier and an unlicensed frequency band carrier, then unlicensed frequency carrier resources is given preference to be allocated to the DRB.

A network device, the network device includes:
a processor, configured to read instructions in a memory to perform the following operation:
determining a DRB mapping manner, where the DRB mapping manner refers to whether a DRB is allowed to be mapped onto a licensed frequency band carrier and/or whether a DRB is allowed to be mapped onto an unlicensed frequency band carrier; and
a transceiver, configured to transmit and receive data under the control of the processor.

Optionally, DRB mapping manners include a first mapping manner and a second mapping manner, where
in the first mapping manner, the DRB is only allowed to be mapped onto a licensed frequency band; and
in the second mapping manner, the DRB is allowed to be mapped onto a licensed frequency band, and onto an unlicensed frequency band.

Optionally, the processor is further configured to perform th following operations:
determining a DRB mapping manner according to a quality of service (QoS) feature and/or a radio link control (RLC) transmission mode of the DRB; or
following a pre-agreed DRB mapping manner.

Optionally, the processor is further configured to perform following operations:
if the RLC mode of the DRB is a Unacknowledged Mode (UM), determining that the DRB is only allowed to be mapped onto a licensed frequency band carrier; and
if the RLC mode of the DRB is an Acknowledged Mode (AM), determining that the DRB is allowed to be mapped onto a licensed frequency band carrier and is allowed to be mapped onto an unlicensed frequency band carrier.

Optionally, the processor is further configured to perform following operations:
when the DRB is being established, determining the mapping manner of the established DRB, according to a quality of service (QoS) feature and/or a radio link control (RLC) transmission mode of the DRB;
after the DRB has been established, re-determining and configuring the mapping manner of the established DRB, according to a signal interference and/or a reception of transmission service; and
when the network device is used as a switching target network device, re-determining and configuring the DRB mapping manner of a switching terminal.

Optionally, the processor is further configured to perform a following operation:
indicating the mapping manner of the DRB for a terminal which has established the DRB.

Optionally, the processor is further configured to perform a following operation:
indicating the mapping manner of the DRB via a radio resource control (RRC) signaling for a terminal which has established the DRB; where
the RRC signaling includes a first DRB list and a second DRB list, where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the transceiver is further configured to:
receive a buffer status report (BSR) sent by a terminal, where the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprise a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB allowed to be mapped onto a licensed frequency band carrier and onto an unlicensed frequency band carrier.

A terminal, including a processor and a transceiver, where
the processor is configured to read instructions in a memory to perform following operations:
determining a DRB mapping manner, where the DRB mapping manner refers to whether a DRB is allowed to be mapped onto a licensed frequency band carrier and/or is allowed to be mapped onto an unlicensed frequency band carrier; and transmitting service data of the DRB on a designated carrier via the transceiver according to the determined DRB mapping manner.

Optionally, DRB mapping manners include a first mapping manner and a second mapping manner; where
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

Optionally, the processor is further configured to perform the following operations:
determining the DRB mapping manner according to indication information transmitted by a network device, where the indication information indicate the DRB mapping manner of the terminal, or,
following a pre-agreed DRB mapping manner.

Optionally, the transceiver is further configured to:
receive the indication information via a radio resource control (RRC) signaling; where
the RRC signaling includes a first DRB list and a second DRB list; where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the processor is further configured to perform following operations:
when the DRB is being established, determining the DRB mapping manner according to a first indication information sent by the network device, where the first indication information indicates the DRB mapping manner of the terminal;
after the DRB has been established, determining the DRB mapping manner according to a second indication information sent by the network device, where the second indication information indicates the DRB mapping manner which is reconfigured for the terminal by the network device; and
after the terminal has switched to a target network device, determining the DRB mapping manner according to a third indication information sent by the target network device, where the third DRB mapping manner indicates the DRB mapping manner which is reconfigured by the target network device for the terminal.

Optionally, the transceiver is further configured to:
send a buffer status report (BSR) to the network device, where the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprises a first category and a second category, in a BSR of the first category, the DRB(s) corresponding to logical channel(s) comprised in a logical channel group is only allowed to be mapped onto a licensed frequency band carrier, while in a BSR of the second category, the DRB(s) corresponding to logical channel(s) comprised in a logical channel group comprises at least a DRB allowed to be mapped onto a licensed frequency band carrier and onto an unlicensed frequency band carrier.

Optionally, the processor is further configured to perform following operations:
determining a priority of the logical channel corresponding to the DRB; and
allocating resources for the logical channel corresponding to the DRB according to the priority, where if the logical channel corresponding to the DRB is allowed to be mapped onto a licensed frequency band carrier and an unlicensed frequency band carrier, then unlicensed frequency carrier resources is given preference to be allocated to the DRB.

In the embodiments of the present disclosure, a network device and a terminal determine a DRB mapping manner, where the DRB mapping manner refers to whether a DRB is allowed to be mapped onto a licensed frequency band carrier and/or is allowed to be mapped onto an unlicensed frequency band carrier; and the network device and the terminal send service data of the DRB on a designated carrier according to the determined DRB mapping manner, thereby realizing data transmission deployment on licensed frequency band resources and/or unlicensed frequency band resources.

### BRIEF DESCRIPTION OF THE DRAWINGS

Fig.1 is a flow chart of a DRB mapping method according to embodiments of the present disclosure.
Fig.2 is a flow chart of another DRB mapping method according to embodiments of the present disclosure.
Fig.3 is a schematic diagram of a base station according to embodiments of the present disclosure.
Fig.4 is a schematic diagram of a terminal according to embodiments of the present disclosure.
Fig.5 is a schematic diagram of another base station according to embodiments of the present disclosure.
Fig.6 is a schematic diagram of another terminal according to embodiments of the present disclosure.

### DETAILED DESCRIPTION

To make the purposes, technical solutions and advantages of the present disclosure clearer, embodiments of the present disclosure will now be described with reference to the accompanying drawings, and obviously the embodiments described are only part of the embodiments of the present disclosure, not all the embodiments. Based on the embodiments of the present disclosure, all the other embodiments obtained by those of ordinary skill in the art without making creative work are within the scope of the present disclosure.

It should be noted that technical solutions of the present disclosure is applicable to various kinds of communication systems, such as Global System of Mobile communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system and Universal Mobile Telecommunication System (UMTS).

It should also be noted that, according to embodiments of the present disclosure, user equipment (UE) includes but is not limited to mobile station (MS), mobile terminal, mobile telephone, handset and portable equipment. The user equipment could communicate with one or a plurality of core networks via a radio access network (RAN). For example, the user equipment could be a mobile telephone (or a "cellular" telephone), or a computer having a wireless communication function; the user equipment could also be a portable, pocket, hand held, computer built-in, or vehicle-mounted mobile device.

According to embodiments of the present disclosure, a base station (for example, an access point) could refer to a device in an access network communicate with a wireless terminal via one or more sectors through an air interface. A base station could be configured to convert a received air frame into an IP packet and convert an IP packet into an air frame, as a router between a wireless terminal and the rest of the access network, where the rest of the access network could include an Internet Protocol (IP) network. A base station could also coordinate the management of the properties of an air interface. For example, a base station could be a base transceiver station (BTS) in GSM or CDMA, a Node B in WCDMA, or an evolutional Node B (NodeB or eNB or e-NodeB) in LTE, which the present disclosure is not limited thereto.

Network architecture according to embodiments of the present disclosure includes a network device and at least one terminal, where the network device could be a base station, and the terminal could be a mobile device with a wireless communication function, such as a mobile phone.

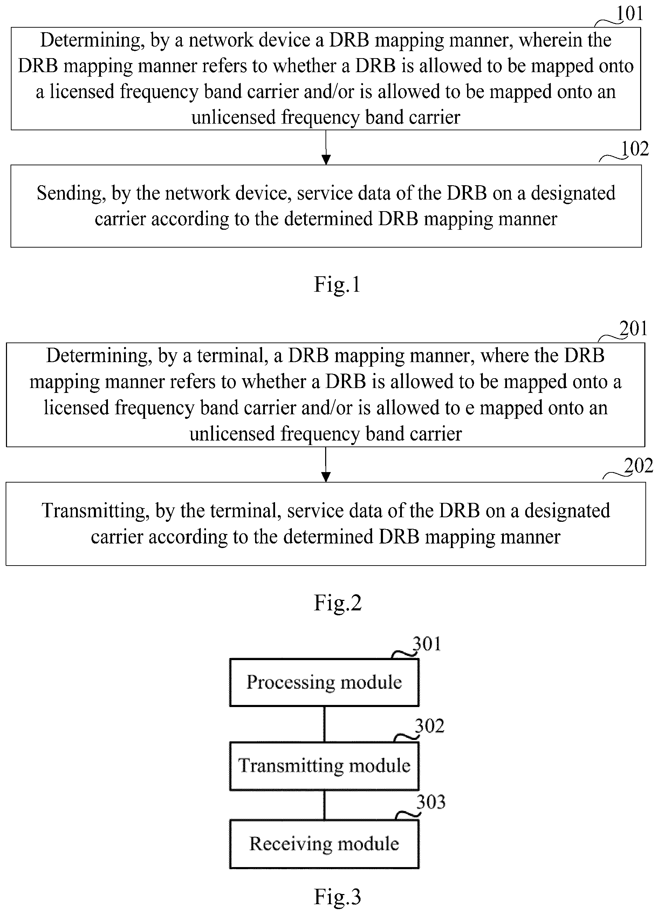

Fig.1 is a flow chart of a Data Radio Bearer (DRB) mapping method according to embodiments of the present disclosure, where the flow illustrates the processing flow on the network side, and includes step 101 and step 102.

Step 101: a network device determines a DRB mapping manner, where the DRB mapping manner refers to whether a DRB is allowed to be mapped onto a licensed frequency band carrier and/or is allowed to be mapped onto an unlicensed frequency band carrier.

DRB mapping manners according to embodiments of the present disclosure include but are not limited to a first mapping manner and a second mapping manner. The first mapping manner refers to a mapping manner that a DRB is only allowed to be mapped onto a licensed frequency band carrier and the second mapping manner refers to a mapping manner that a DRB is allowed to be mapped onto a licensed frequency band carrier and is allowed to be mapped onto an unlicensed frequency band carrier.

Step 102: the network device sends service data of the DRB on a designated carrier according to the determined DRB mapping manner.

In step 101, the network device could determine a DRB mapping manner according to Quality of Service (QoS) feature and/or Radio Link Control (RLC) transmission mode of a DRB, where the network device could also follow a pre-determined DRB mapping manner, so that service data having certain requirements for the service quality (such as an online video or game) is not to be sent on an unlicensed frequency band carrier, thereby avoiding a service delay increase caused by the discontinuous work of the unlicensed frequency band carrier and a service quality reduction caused by time delay shaking, such that the service experience of a user can be effectively improved.

Optionally, the network device could determine a DRB mapping manner according to QoS feature, on the basis of a preset table of corresponding relationship between QoS Class Identifier (OCI) and DRB mapping manner. As illustrated in Table 1, two kinds of services are defined, that is, the Guaranteed Bit Rate (GBR) and the Non Guaranteed Bit Rate (Non-GBR), and 9 OCIs are defined, in standard protocol. The DRB of every transmission service established by a terminal corresponds to one OCI. According to embodiments of the present disclosure, corresponding DRB mapping manner(s) could be set for these 9 OCIs in advance, for example, corresponding DRB mapping manner(s) set for OCI lower than or equal to 5 could be that the DRB(s) is only allowed to be mapped onto a licensed frequency band carrier, so that where the network device is mapping a DRB, it could obtain the corresponding DRB mapping manner by looking up in the corresponding relationship table according to the OCI of the DRB.

**Table 1: QoS Class Identifier**

| **QCI** | **Resource Type** | **Priority** | **Packet Delay Budget (NOTE 1)** | **Packet Error Loss Rate (NOTE 2)** | **Example Services** |
|---|---|---|---|---|---|
| 1 | GBR | 2 | 100 ms | 10⁻² | Conversational Voice |
| 2 | | 4 | 150 ms | 10⁻³ | Conversational Video (Live Streaming) |
| 3 | | 3 | 50 ms | 10⁻³ | Real Time Gaming |
| 4 | | 5 | 300 ms | 10⁻⁶ | Non-Conversational Video (Buffered Streaming) |
| 5 | Non-GBR | 1 | 100 ms | 10⁻⁶ | IMS Signalling |
| 6 | | 6 | 300 ms | 10⁻⁶ | Video (Buffered Streaming) TCP-based (e.g., www, e-mail, chat, ftp, p2p file sharing, progressive video, etc.) |
| 7 | | 7 | 100 ms | 10⁻³ | Voice, Video (Live Streaming) Interactive Gaming |
| 8 | | 8 | 300 ms | 10⁻⁶ | Video (Buffered Streaming) TCP-based (e.g., www, e-mail, chat, ftp, p2p file sharing, progressive video, etc.) |
| 9 | | 9 | | | |

Optionally, when the network device determines a DRB mapping manner according to RLC transmission mode or a pre-agreed DRB mapping manner, it could follow the following principles: if the RLC mode of the DRB is Unacknowledged Mode (UM), determining that the DRB is only allowed to be mapped onto a licensed frequency band carrier; and if the RLC mode of the DRB is Acknowledged Mode (AM), determining that the DRB is allowed to be mapped onto a licensed frequency band carrier and is allowed to be mapped onto an unlicensed frequency band carrier.

The AM mode refers to a mode that only when an acknowledgement from the receiving end for every transmitted RLC data packet is received, a subsequently data packet could be transmitted, and if no acknowledgement is received for a certain data packet, the transmitting end will resend the data packet until an acknowledgement is received or the maximum number of retransmissions is reached. This mode would ensure reliable transmission of data packets. According to the present embodiment, if the RLC mode of the DRB is the AM mode, the DRB is allowed to be mapped onto both a licensed frequency band carrier and an unlicensed frequency band carrier, and could be configured to transmit service data packets sensitive to data packet loss.

The UM mode refers to a mode that no acknowledgement is needed for a transmitted RLC data packet. In general, this transmission mode cannot ensure reliable transmission of data packets but could ensure data transmission delay relatively well, suitable for services insensitive to data packet loss but sensitive to transmission delay. According to the present embodiment, if the RLC mode of the DRB is the UM mode, the DRB is only allowed to be mapped onto a licensed frequency band carrier, and could be configured to transmit service data packets insensitive to data packet loss but sensitive to transmission delay.

In addition, after step 102, the network device could indicate the DRB mapping manner for a terminal which has established the DRB. For example, the network device could indicate the DRB mapping manner for a terminal which has established the DRB via radio resource control (RRC) signaling.

The network device could indicate the DRB mapping manner via RRC signaling in many ways. Optionally, the RRC signaling could include a first DRB list and a second DRB list, where a DRB in the first DRB list is allowed to be mapped both onto a licensed frequency band carrier and an unlicensed frequency band carrier, while a DRB in the second DRB list is not allowed to be mapped onto an unlicensed frequency band carrier.

Moreover, according to embodiments of the present disclosure, the network device could determine a DRB mapping manner on different occasions, for example, it could determine a DRB mapping manner on one or more of the following occasions:
determine the mapping manner of a DRB being established, according to the QoS feature and the RLC transmission mode of the DRB when the DRB is being established;
re-determine and configures the mapping manner of a established DRB according to signal interference and/or reception qualify of transmission service, after the DRB has been established; and
the network device as a switching target network device, after having received a DRB mapping manner information of a switching terminal transmitted by a source network device, re-determines and configures the DRB mapping manner of the switching terminal.

According to embodiments of the present disclosure above, a DRB mapping manner is determined by a network device, and is indicated for a terminal; according to the determined DRB mapping manner, the network device and the terminal transmit service data of a DRB on a designated carrier, thereby realizing data transmission on a licensed frequency band resources and /or an unlicensed frequency band resources.

Fig.2 is a flow chart of another DRB mapping method according to embodiments of the disclosure, where the flow illustrates processing flow on the terminal side, which includes the following step 201 and step 202.

Step 201: a terminal determines a DRB mapping manner, where the DRB mapping manner refers to whether a DRB is allowed to be mapped onto a licensed frequency band carrier and/or is allowed to be mapped onto an unlicensed frequency band carrier.

DRB mapping manners according to embodiments of the present disclosure include but are not limited to a first mapping manner and a second mapping manner. The first mapping manner refers to a mapping manner that a DRB is only allowed to be mapped onto a licensed frequency band carrier and the second mapping manner refers to a mapping manner that a DRB is allowed to be mapped onto a licensed frequency band carrier and is allowed to be mapped onto an unlicensed frequency band carrier.

Step 202: the terminal transmits service data of the DRB on a designated carrier according to the determined DRB mapping manner.

In step 201, a terminal could determine a DRB mapping manner in the following two ways.

The first way: a terminal determines a DRB mapping manner according to indication information transmitted by a network device, where the indication information indicate the DRB mapping manner of the terminal; the terminal receives the indication information via radio resource control (RRC) signaling; and the RRC signaling includes a first DRB list and a second DRB list; where a DRB of the first DRB list is allowed to be mapped both onto a licensed band frequency carrier and onto an unlicensed band frequency carrier, and a DRB of the second DRB list is not allowed to be mapped onto an unlicensed band frequency carrier.

The second way: a terminal follows a pre-agreed DRB mapping manner. For example, it is pre-agreed that a DRB whose RLC mode is UM could only be mapped onto a licensed frequency band carrier, and a DRB whose RLC mode is AM could be mapped onto both a licensed frequency band carrier and an unlicensed frequency band carrier, then the terminal determines a DRB manner by following the agreement.

According to embodiments of the present disclosure, the terminal could determine a DRB mapping manner on different occasions, for example, it could determine a DRB mapping manner on one or more of the following occasions:
when a DRB is being established, the terminal receives a first indication information sent by the network device, and determines a DRB mapping manner according to the first indication information, where the first indication information indicates a DRB mapping manner of the terminal;
after the DRB has been established, the terminal receives a second indication information sent by the network device and determines a DRB mapping manner according to the second indication information, where the second indication information indicates a DRB mapping manner reconfigured for the terminal by the network device; and
after the terminal has switched to a target network device, it receives a third indication information sent by the target network device and determines a DRB mapping manner, where the third DRB mapping manner indicates a DRB mapping manner reconfigured by the target network device for the terminal.

According to embodiments of the present disclosure, the mapping manner of a DRB is determined by a terminal and service data of the DRB is transmitted on a designated carrier according to the DRB mapping manner, thereby realizing data transmission on licensed frequency band resources and/or unlicensed frequency band resources.

Moreover, after the terminal determines the mapping manner of the DRB, it sends a BSR carrying the amount of data to be transmitted of the DRB to the network device, and there are three ways to send a BSR.

The first way: the terminal maps logical channels corresponding to uplink DRBs transmitted on different categories of carriers onto different logical channel groups.

For example, logical channels 0-3 could only transmit data on a licensed frequency band carrier, and logical channels 4-9 could be mapped onto a licensed frequency band carrier or an unlicensed frequency band carrier to transmit data, then when a DRB is being mapped onto a logical channel group, these two categories of logical channels could be mapped onto different logical groups. For example, the logical channels 0 and 1 are mapped onto logical channel group 0, the logical channels 2 and 3 are mapped onto logical channel group 1, the logical channels 4,6,7,8 and 9 are mapped onto logical channel group 2 and the logical channel 5 is mapped onto logical channel group 3.

When the network device receives a BSR with respect to the logical channel groups 0 and 1, it would know that this amount of data could only be transmitted on a licensed frequency band carrier; when it receives a BSR with respect to the logical channel groups 2 and 3, it would know that this amount of data could be transmitted on both categories of carriers.

The second way: the terminal reports two categories of BSRs, where one category of BSR only includes the amount of data of each logical channel group that is only able to be transmitted on a licensed frequency band carrier, and the other category of BSR includes the amount of data of each logical channel group that is able to be transmitted on an unlicensed frequency band carrier or a licensed frequency band carrier.

For example, logical channels 0-3 could only transmit data on a licensed frequency band carrier, and logical channels 4-9 could be mapped onto a licensed frequency band carrier and an unlicensed frequency band carrier to transmit data; when logical channel groups are being divided, the logical channels 0, 4 and 5 are mapped onto logical channel group 0, the logical channels 1, 6 and 7 are mapped onto logical channel group 1, the logical channels 2 and 8 are mapped onto logical channel group 2, and the logical channels 3 and 9 are mapped onto logical channel group 3.

When reporting a BSR, the terminal could report two categories of BSR, where the first category of BSR indicates the amount of data that is only able to be transmitted on a licensed frequency band carrier, that is, the logical channel group 0 only includes the data of the logical channel 0, the logical channel group 1 only includes the data of the logical channel 1, the logical channel group 2 only includes the data of the logical channel 2 and the logical channel group 3 only includes the data of the logical channel 3; the second category of BSR indicates the amount of data able to be transmitted on an unlicensed frequency band carrier or a licensed frequency band carrier, that is, the logical channel group 0 only includes the amount of data of the logical channels 4 and 5, the logical channel group 1 only includes the amount of data of the logical channels 6 and 7, the logical channel group 2 only includes the amount of data of the logical channel 8 and the logical channel group 3 only includes the amount of data of the logical channel 9.

Moreover, the two categories of BSR above could be differentiated by the R bit in the sub head of Media Access Control (MAC) address, or by logical channel identity (LCID).

Therefore, the network device could determine the amount of data to be transmitted on the two categories of carriers, according to the category of a BSR.

The third way: the terminal sends two categories of BSR, where one category of BSR only includes the amount of data only able to be transmitted on a licensed frequency band carrier, while the other category of BSR includes all the amount of data to be transmitted of each logical channel group.

For example, if logical channels 0-3 are only able to transmit data on a licensed frequency band carrier, and the logical channels 4-9 could be mapped onto a licensed frequency band carrier and un licensed frequency band carrier to transmit data, when logical channel groups are being divided, the logical channels 0, 4 and 5 are mapped onto logical channel group 0, the logical channels 1, 6 and 7 are mapped onto logical channel group 1, the logical channels 2 and 8 are mapped onto logical channel group 2, and the logical channels 3 and 9 are mapped onto logical channel group 3.

When reporting a BSR, the terminal could report two categories of BSR, where the first category of BSR indicates the amount of data of each logical channel group that is only able to be transmitted on a licensed frequency band carrier, that is, the logical channel group 0 only includes the amount of data of the logical channel 0, the logical channel group 1 only includes the amount of data of the logical channel 1, the logical channel group 2 only includes the amount of data of the logical channel 2 and the logical channel group 3 only includes the amount of data of the logical channel 3; the second category of BSR indicates the total amount of data to be transmitted of each logical channel group, that is, the logical channel group 0 includes the amount of data of the logical channels 0, 4 and 5, the logical channel group 1 includes the amount of data of the logical channels 1, 6 and 7, the logical channel group 2 includes the amount of data of the logical channels 2 and 8 and the logical channel group 3 includes the amount of data of the logical channel 9.

The two categories of BSR could be differentiated by the R bit in the sub head of MAC address, or by LCID.

Therefore, the network device could determine the amount of data to be transmitted on the two categories of carriers, according to the category of a BSR.

According to embodiments of the present disclosure, after the terminal determines the mapping manner of a DRB, it determines the priority of the logical channel corresponding to the DRB, and allocates resources for the logical channel corresponding to the DRB according to the priority, which includes the following three steps.

Step one: the terminal determines the resource allocation order of each logical channel according to a conventional logical channel priority queuing mechanism and allocates the resources in turn from the first logical channel to other logical channels;
Step two: If the data of the current logical channel could be transmitted on an unlicensed frequency band carrier resources, it is given priority to assign unlicensed frequency band carrier resources to the data of the current logical channel; if all of the unlicensed frequency band carrier resources have been allocated, licensed frequency band carrier resources would be allocated to the data of the current logical channel until all the licensed frequency band carrier resources has been allocated or transmission resources have been allocated to all the data to be transmitted of the current logical channel; and if the data of the current logical channel could only be transmitted on a licensed frequency band carrier resources, then licensed frequency band carrier resources would be allocated to the data of the current logical channel until all the conventional carrier resources have been allocated or transmission resources have been allocated to all the data to be transmitted of the current logical channel.

Step three: if there are some resources that have not been allocated, and a logical channel to which no resources has been allocated yet, then return to step 2 to continue to allocate resources for the next logical channel.

For a clearer understanding of the present disclosure, several specific embodiments will now be described in detail.

### Embodiment one

According to this embodiment, a network has deployed an LTE-U carrier as an auxiliary carrier for providing radio resources to a terminal. A network device determines the mapping manner of an established DRB when the DRB is being established.

When the DRB is being established, the network device determines the mapping manner of the established DRB according to the QoS feature and/or RLC transmission mode of the DRB. For example, if the OCI of a DRB is smaller than or equal to 5, then it is determined that the DRB cannot be mapped onto an unlicensed frequency band carrier. The network device sends indication information to a terminal via a special RRC signaling, where the indication information includes the determined specific mapping manner of the DRB.

After the terminal has received the indication information sent by the network device, it establishes the DRB. The terminal maps a DRB whose OCI falls into the scope of 1 to 5 onto a licensed frequency band carrier, does not limit the mapping of a DBR whose OCI falls into the scope of 6 to 9, and according to the availability of radio resources, a DBR whose OCI falls into the scope of 6 to 9 could be mapped onto a physical channel of licensed frequency band carrier and a physical channel of unlicensed frequency band carrier.

### Embodiments two

In this embodiment, a network device has deployed an unlicensed frequency band LTE-U carrier as an auxiliary carrier for providing radio resources to the terminal. The network device, after a DRB has been established, re-determines and configures a mapping manner of the established DRB, according to signal interference and/or reception of transmission service.

When the DRB is being established, the network device configures that a DRB whose OCI falls into the scope of 1 to 5 could only be mapped onto a licensed frequency band carrier, while a DBR whose OCI falls into the scope of 6 to 9 could be mapped onto a licensed frequency band carrier and an unlicensed frequency band carrier.

After the DRB has been established, the network device could, at a certain moment, modify the existing configuration configured when the DRB is being established, according to signal interference and reception of a specific service. For example, the network device modifies configurations of a DRB whose OCI is 6 or 7, and restricts the DRB whose OCI is 6 or 7 from mapping onto an unlicensed frequency band carrier. After the network device has re-determined and configured the mapping manner of the established DRB, it sends indication information to the terminal via a special RRC signaling, where the indication information includes the re-determined and configured specific mapping manner of the DRB.

After the terminal has received indication information, it modifies the DRB mapping manner into the re-configured DRB mapping manner, for example, for a DRB whose OCI is 6 or 7, the terminal only maps it onto a licensed frequency band carrier.

### Embodiment three

A network has deployed an unlicensed frequency band LTE-U carrier as an auxiliary carrier for providing radio resources to a user. A network device, as a switching target network device, receives DRB mapping manner information of a switching terminal sent by a source network device, re-determines and configures the DRB mapping manner of the switching terminal.

When the terminal is receiving a service from the source network device, the source network device configures a mapping manner for the terminal's DRB, where a DRB whose OCI is 7 cannot be transmitted on an unlicensed frequency band carrier. When the terminal switches from the source network device to the target network device, the existing DRB mapping manner is transmitted to the target network device from the source network device via an interface between network devices. After the terminal has switched to the target network device, the target network device decides to change the existing DRB mapping manner and allow a DRB whose OCI is 7 to be mapped onto a licensed frequency band carrier and an unlicensed frequency band carrier.

After the target network device has re-configured the DRB mapping manner, it sends indication information to the terminal via a special RRC signaling, where the indication information includes the specific mapping manner of the re-configured DRB. After the terminal has received the indication information, it modifies the DRB mapping manner into the re-configured DRB mapping manner.

### Embodiment four

According to this embodiment, a network device deploys an unlicensed frequency band LTE-U carrier as an auxiliary carrier for providing radio resources to a user. The network device and a terminal follow a pre-agreed DRB mapping manner.

Optionally, the network device follows the pre-agreed DRB mapping manner, for example, it is pre-agreed that a DRB whose RLC mode is UM could only be mapped onto a licensed frequency band carrier and a DRB whose RLC mode is AM could be mapped onto a licensed frequency band carrier and an unlicensed frequency band carrier, then the network device and the terminal follow this agreement, respectively, to determine the DRB mapping manner.

In view of the above-mentioned method flow, embodiments of the present disclosure further provide a base station and a terminal, and the details of the base station and the terminal can be implemented with reference to the above- mentioned method, and will not be described again herein.

Fig.3 is a schematic diagram of a base station according to embodiments of the present disclosure, the base station includes:
a processing module 301, configured to determine a DRB mapping manner, where the DRB mapping manner refers to whether a DRB is allowed to be mapped onto a licensed frequency band carrier and/or whether a DRB is allowed to be mapped onto an unlicensed frequency band carrier; and
a transmitting module 302, configured to send service data of the DRB on a designated carrier according to determined DRB mapping manner.

Optionally, DRB mapping manners include a first mapping manner and a second mapping manner, where
in the first mapping manner, the DRB is only allowed to be mapped onto a licensed frequency band; and
in the second mapping manner, the DRB is not only allowed to be mapped onto a licensed frequency band, but also onto an unlicensed frequency band.

Optionally, the processing module 301 is further configured to:
determine a DRB mapping manner according to quality of service (QoS) feature and/or radio link control (RLC) transmission mode of the DRB; or follow a pre-agreed DRB mapping manner.

Optionally, the processing module is further configured to:
if the RLC mode of the DRB is Unacknowledged Mode (UM), determine that the DRB is only allowed to be mapped onto a licensed frequency band carrier; and
if the RLC mode of the DRB is Acknowledged Mode (AM), determine that the DRB is allowed to be mapped onto a licensed frequency band carrier and is allowed to be mapped onto an unlicensed frequency band carrier.

Optionally, the processing module 301 is further configured to:
when the DRB is being established, determine the mapping manner of the established DRB, according to quality of service (QoS) feature and/or radio link control (RLC) transmission mode of the DRB;
after the DRB has been established, re-determine and configure the mapping manner of the established DRB, according to signal interference and/or reception of transmission service; and
when the network device is used as a switching target network device, re-determine and configure the DRB mapping manner of the switching terminal.

Optionally, the processing module 301 is further configured to:
indicate the mapping manner of the DRB for a terminal which has established the DRB.

Optionally, the processing module 301 is further configured to:
indicate the mapping manner of the DRB via radio resource control (RRC) signaling for a terminal which has established the DRB; where
the RRC signaling includes a first DRB list and a second DRB list, where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the network device further includes:
a receiving module 303, configured to receive a buffer status report (BSR) sent by a terminal, where the BSR carries the amount of data to be transmitted of the DRB, and the DRB(s) corresponding to all the logic channels of a logical channel group has the same or different mapping manners;
if the DRBs corresponding to logical channels of a logical channel group have different mapping manners, then a BSR sent by the terminal indicates the category of the BSR, where the category of BSR includes a first category and a second category, in a BSR of the first category, the DRB(s) corresponding to logical channel(s) included in a logical channel group is only allowed to be mapped onto a licensed frequency band carrier, while in a BSR of the second category, the DRB(s) corresponding to logical channel(s) included in a logical channel group at least include a DRB allowed to be mapped onto a licensed frequency band carrier and onto an unlicensed frequency band carrier.

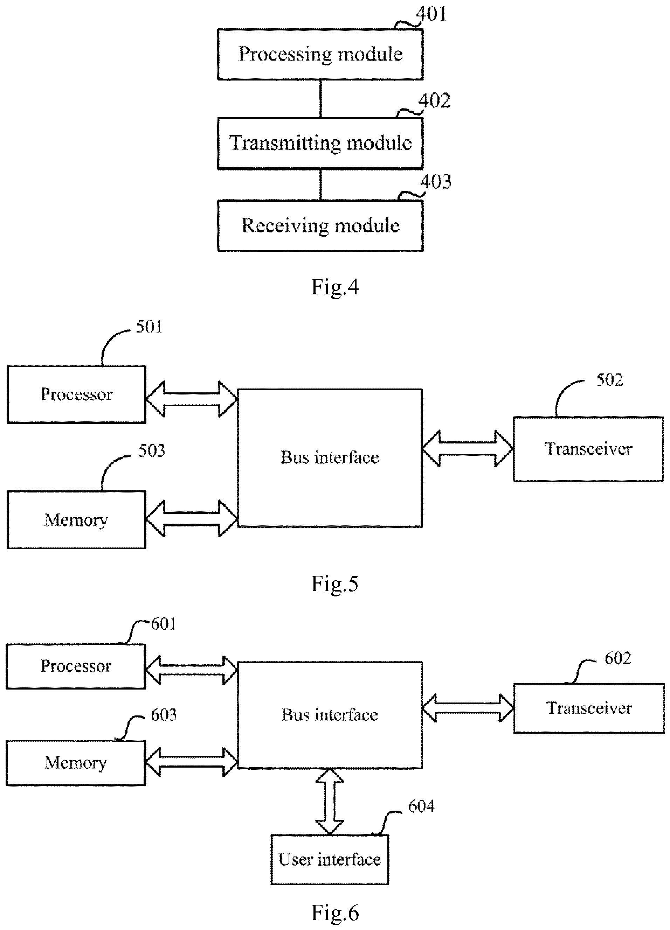

Fig.4 is a schematic diagram of a terminal according to embodiments of the present disclosure, the terminal includes:
a processing module 401, configured to determine a DRB mapping manner, where the DRB mapping manner refers to whether a DRB is allowed to be mapped onto a licensed frequency band carrier and/or is allowed to be mapped onto an unlicensed frequency band carrier; and
a transmitting module 402, configured to transmit service data of the DRB on a designated carrier according to the determined DRB mapping manner.

Optionally, DRB mapping manners include a first mapping manner and a second mapping manner; where
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

Optionally, the processing module 401 is further configured to:
determine the DRB mapping manner according to indication information transmitted by a network device, where the indication information indicate the DRB mapping manner of the terminal, or,
follow a pre-agreed DRB mapping manner.

Optionally, the terminal further includes:
a receiving module 403, configured to receive the indication information via radio resource control (RRC) signaling; where
the RRC signaling includes a first DRB list and a second DRB list; where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the processing module 401 is further configured to:
when the DRB is being established, determine the DRB mapping manner according to first indication information sent by the network device, where the first indication information indicates the DRB mapping manner of the terminal;
after the DRB has been established, determine the DRB mapping manner according to second indication information sent by the network device, where the second indication information indicates the DRB mapping manner, reconfigured for the terminal by the network device; and
after the terminal has switched to a target network device, determine the DRB mapping manner according to third indication information sent by the target network device, where the third DRB mapping manner indicates the DRB mapping manner, reconfigured by the target network device for the terminal.

Optionally, the transmitting module 402 is further configured to:
send a buffer status report (BSR) to the network device, where the BSR carries the amount of data to be transmitted of the DRB, and the DRB(s) corresponding to all the logic channels of a logical channel group has the same or different mapping manners;
if the DRBs corresponding to logical channels of a logical channel group have different mapping manners, then a BSR sent by the terminal indicates a category of the BSR, where the category of BSR includes a first category and a second category, in a BSR of the first category, the DRB(s) corresponding to logical channel(s) included in a logical channel group is only allowed to be mapped onto a licensed frequency band carrier, while in a BSR of the second category, the DRB(s) corresponding to logical channel(s) included in a logical channel group at least include allowed to be mapped onto a licensed frequency band carrier and onto an unlicensed frequency band carrier.

Optionally, the processing module 401 is further configured to:
determine the priority of the logical channel corresponding to the DRB; and
allocate resources for the logical channel corresponding to the DRB according to the priority, where if the logical channel corresponding to the DRB is allowed to be mapped onto a licensed frequency band carrier and an unlicensed frequency band carrier, then unlicensed frequency carrier resources is given preference to be allocated to the DRB.

Fig.5 is a schematic diagram of another base station according to embodiments of the present disclosure, the base station includes:
a processor 501, configured to read instructions in a memory 503 to perform the following operation: determining a DRB mapping manner, where the DRB mapping manner refers to whether a DRB is allowed to be mapped onto a licensed frequency band carrier and/or whether a DRB is allowed to be mapped onto an unlicensed frequency band carrier; and
a transceiver 502, configured to transmit and receive data under the control of the processor.

Optionally, DRB mapping manners include a first mapping manner and a second mapping manner, where
in the first mapping manner, the DRB is only allowed to be mapped onto a licensed frequency band; and
in the second mapping manner, the DRB is not only allowed to be mapped onto a licensed frequency band, but also onto an unlicensed frequency band.

Optionally, the processor 501 is further configured to perform the following operations:
determining a DRB mapping manner according to quality of service (QoS) feature and/or radio link control (RLC) transmission mode of the DRB; or
following a pre-agreed DRB mapping manner.

Optionally, the processor 501 is further configured to perform the following operations:
if the RLC mode of the DRB is Unacknowledged Mode (UM), determining that the DRB is only allowed to be mapped onto a licensed frequency band carrier; and
if the RLC mode of the DRB is Acknowledged Mode (AM), determining that the DRB is allowed to be mapped onto a licensed frequency band carrier and is allowed to be mapped onto an unlicensed frequency band carrier.

Optionally, the processor 501 is further configured to perform the following operations:
when the DRB is being established, determining the mapping manner of the established DRB, according to quality of service (QoS) feature and/or radio link control (RLC) transmission mode of the DRB;
after the DRB has been established, re-determining and configuring the mapping manner of the established DRB, according to signal interference and/or reception of transmission service; and
when the network device is used as a switching target network device, re-determining and configuring the DRB mapping manner of the switching terminal.

Optionally, the processor 501 is further configured to perform the following operation:
indicating the mapping manner of the DRB for a terminal which has established the DRB.

Optionally, the processor 501 is further configured to perform the following operation:
indicating the mapping manner of the DRB via radio resource control (RRC) signaling for a terminal which has established the DRB; where
the RRC signaling includes a first DRB list and a second DRB list, where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the transceiver is further configured to:
receive a buffer status report (BSR) reported by a terminal, where the BSR carries the amount of data to be transmitted of the DRB, and the DRB(s) corresponding to all the logic channels of a logical channel group has the same or different mapping manners;
if the DRBs corresponding to logical channels of a logical channel group have different mapping manners, then a BSR reported by the terminal indicates the category of the BSR, where the category of BSR includes a first category and a second category, in a BSR of the first kind, the DRB(s) corresponding to logical channel(s) included in a logical channel group is only allowed to be mapped onto a licensed frequency band carrier, while in a BSR of the second category, the DRB(s) corresponding to logical channel(s) included in a logical channel group at least include a DRB allowed to be mapped onto a licensed frequency band carrier and onto an unlicensed frequency band carrier.

In Fig.5, the bus architecture could include any number of interconnected buses and bridges, specifically linked together by various circuits of one or more processors represented by the processor 501 and a memory represented by the memory 503. The bus architecture could also link various other circuits together such as peripherals, regulators, and power management circuits, which are well known in the art and, as such, are not further described herein. A bus interface provides an interface. The transceiver 502 could be a plurality of elements, i.e., it includes a transmitter and a transceiver, providing means for communicating with various other devices on a transmission medium. The processor 501 is responsible for managing the bus architecture and the usual processing, and the memory 503 may store data that is used by the processor 501 when performing operations.

Fig.6 is a schematic diagram of another terminal according to embodiments of the present disclosure, the terminal includes:
a processor 601, configured to read instructions in a memory 603 to perform the following operations: determining a DRB mapping manner, where the DRB mapping manner refers to whether a DRB is allowed to be mapped onto a licensed frequency band carrier and/or is allowed to be mapped onto an unlicensed frequency band carrier; and transmitting service data of the DRB on a designated carrier via a transceiver 602 according to the determined DRB mapping manner.

Optionally, DRB mapping manners include a first mapping manner and a second mapping manner; where
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

Optionally, the processor 601 is further configured to perform the following operations:
determining the DRB mapping manner according to indication information transmitted by a network device, where the indication information indicate the DRB mapping manner of the terminal, or,
following a pre-agreed DRB mapping manner.

Optionally, the transceiver 602 is further configured to:
receive the indication information via radio resource control (RRC) signaling; where
the RRC signaling includes a first DRB list and a second DRB list; where a DRB of the first DRB list is allowed to be mapped onto a licensed band frequency carrier and onto an unlicensed band frequency carrier, and a DRB of the second DRB list is not allowed to be mapped onto an unlicensed band frequency carrier.

Optionally, the processor 601 is further configured to perform the following operations:
when the DRB is being established, determining the DRB mapping manner according to a first indication information sent by the network device, where the first indication information indicates the DRB mapping manner of the terminal;
after the DRB has been established, determining the DRB mapping manner according to a second indication information sent by the network device, where the second indication information indicates the DRB mapping manner, reconfigured for the terminal by the network device; and
after the terminal has switched to a target network device, determining the DRB mapping manner according to a third indication information sent by the target network device, where the third DRB mapping manner indicates the DRB mapping manner, reconfigured by the target network device for the terminal.

Optionally, the transceiver 602 is further configured to:
send a buffer status report (BSR) to the network device, where the BSR carries the amount of data to be transmitted of the DRB, and the DRB(s) corresponding to all the logic channels of a logical channel group has the same or different mapping manners;
if the DRBs corresponding to logical channels of a logical channel group have different mapping manners, then a BSR reported by the transceiver indicates the category of the BSR, where category kinds of BSR includes a first category and a second category, in a BSR of the first category, the DRB(s) corresponding to logical channel(s) included in a logical channel group is only allowed to be mapped onto a licensed frequency band carrier, while in a BSR of the second category, the DRB(s) corresponding to logical channel(s) included in a logical channel group at least include a DRB allowed to be mapped onto a licensed frequency band carrier and onto an unlicensed frequency band carrier.

Optionally, the processor 601 is further configured to perform the following operations:
determining the priority of the logical channel corresponding to the DRB; and
allocating resources for the logical channel corresponding to the DRB according to the priority, where if the logical channel corresponding to the DRB is allowed to be mapped onto both a licensed frequency band carrier and an unlicensed frequency band carrier, then unlicensed frequency carrier resources is given preference to be allocated to the DRB.

In Fig.6, the bus architecture may include any number of interconnected buses and bridges, specifically linked together by a variety of circuits including one or multiple processors represented by the processor 601 and a memory represented by the memory 603. The bus architecture may also link various other circuits together, such as peripherals, regulators, power management circuits, and the like, which are well known in the art and are not further described herein. The bus interface provides an interface. The transceiver 602 may be a plurality of elements, i.e., it may include a transmitter and a receiver, providing means for communicating with various other devices on the transmission medium. For a different user device, the user interface 604 may also be an interface capable of external access to a device that includes, but is not limited to, a keypad, a display, a speaker, a microphone, or a joystick.

The processor 601 is responsible for managing the bus architecture and usual processing, and the memory 603 may store the data used by the processor 602 when performing operations.

It can be seen from the contents above that, the method according to the embodiments of the present disclosure includes: determining a DRB mapping manner, by a network device and a terminal, wherein the DRB mapping manner refers to whether a DRB is allowed to be mapped onto a licensed frequency band carrier and/or is allowed to be mapped onto an unlicensed frequency band carrier; and sending service data of the DRB, by the network device and the terminal, on a designated carrier according to the determined DRB mapping manner. The embodiments of the present invention enable service data having certain requirements for the service quality (such as a VOIP service, an online video, a game, and etc.) not to be sent on an unlicensed frequency band carrier, thereby avoiding a service delay increase caused by the discontinuous work of the unlicensed frequency band carrier and a service quality reduction caused by time delay shaking, such that the service experience of a user can be effectively improved.

It will be appreciated by those skilled in the art that the embodiments of the present disclosure may be provided as a method, system, or a computer program product. Thus, the present disclosure may take the form of a complete hardware embodiment, a complete software embodiment, or a combination of software and hardware aspects. Moreover, the present disclosure may take the form of a computer program product implemented in one or more computer usable storage media (including but not limited to disk storage, a CD-ROM, or an optical memory, and etc.) in which computer usable program codes are included.

The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored onto a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the embodiments of the disclosure have been described, those skilled in the art benefiting from the underlying inventive concept can make additional modifications and variations to these embodiments. Therefore the appended claims are intended to be construed as encompassing the embodiments and all the modifications and variations coming onto the scope of the disclosure.

Evidently those skilled in the art can make various modifications and variations to the disclosure without departing from the spirit and scope of the disclosure. Thus the disclosure is also intended to encompass these modifications and variations thereto so long as the modifications and variations come onto the scope of the claims appended to the disclosure and their equivalents.

## Claims

1. A data radio bearer, DRB, mapping method, the method comprises:
determining, by a network device, a DRB mapping manner, wherein the DRB mapping manner refers to whether a DRB is allowed to be mapped onto a licensed frequency band carrier and/or whether a DRB is allowed to be mapped onto an unlicensed frequency band carrier; and
sending, by the network device, service data of the DRB on a designated carrier according to determined DRB mapping manner.

2. The method according to claim 1, wherein the DRB mapping manner comprises a first mapping manner and a second mapping manner, wherein
in the first mapping manner, the DRB is only allowed to be mapped onto a licensed frequency band; and
in the second mapping manner, the DRB is allowed to be mapped onto a licensed frequency band, and onto an unlicensed frequency band.

3. The method according to claim 1, wherein the determining, by the network device, a DRB mapping manner, comprises:
determining, by the network device, a DRB mapping manner according to a quality of service, QoS, feature and/or a radio link control, RLC transmission mode of the DRB; or
following, by the network device, a pre-agreed DRB mapping manner.

4. The method according to claim 3, wherein determining, by the network device, a DRB mapping manner according to the RLC transmission mode, comprises:
if the RLC transmission mode of the DRB is a Unacknowledged Mode, UM, determining that the DRB is only allowed to be mapped onto a licensed frequency band carrier; and
if the RLC transmission mode of the DRB is an Acknowledged Mode, AM, determining that the DRB is allowed to be mapped onto a licensed frequency band carrier and is allowed to be mapped onto an unlicensed frequency band carrier.

5. The method according to claim 1, wherein the determining, by the network device, a DRB mapping manner, comprises one or a combination of the following:
when a DRB is being established, determining, by the network device, the mapping manner of established DRB, according to a quality of service, QoS, feature and/or a radio link control, RLC, transmission mode of the DRB;
after a DRB has been established, re-determining and configuring, by the network device, the mapping manner of the established DRB, according to a signal interference and/or a reception of transmission service; and
receiving, by the network device acting as a switching target network device, a DRB mapping manner information of a switching terminal from a source network device, and re-determining and configuring, by the target network device, the DRB mapping manner of the switching terminal.

6. The method according to any of the claims 1-5, wherein after the determining, by network device, a DRB mapping manner, the method further comprises:
indicating, by the network device, the mapping manner of the DRB for a terminal which has established the DRB.

7. The method according to claim 6, wherein indicating, by the network device, the mapping manner of the DRB via a radio resource control, RRC, signaling for a terminal which has established the DRB; wherein
the RRC signaling comprises a first DRB list and a second DRB list, wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

8. The method according to claim 1, wherein after determining, by the network device, a DRB mapping manner, the method further comprises:
receiving, by the network device, a buffer status report, BSR, reported by a terminal, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR reported by the terminal indicates a category of the BSR, wherein the category of BSR comprise a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB which is allowed to be mapped onto a licensed frequency band carrier and onto an unlicensed frequency band carrier.

9. A data radio bearer, DRB, mapping method, the method comprises:
determining, by a terminal, a DRB mapping manner, wherein the DRB mapping manner refers to whether a DRB is allowed to be mapped onto a licensed frequency band carrier and/or is allowed to be mapped onto an unlicensed frequency band carrier; and
transmitting, by the terminal, service data of the DRB on a designated carrier according to determined DRB mapping manner.

10. The method according to claim 9, wherein the DRB mapping manner comprise a first mapping manner and a second mapping manner; wherein
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

11. The method according to claim 9, wherein the determining, by the terminal, a DRB mapping manner, comprises:
determining, by the terminal, the DRB mapping manner according to indication information transmitted by a network device, wherein the indication information indicate the DRB mapping manner of the terminal, or,
following, by the terminal, a pre-agreed DRB mapping manner.

12. The method according to claim 11, wherein the indication information is received via radio resource control, RRC, signaling; wherein
the RRC signaling comprises a first DRB list and a second DRB list; wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

13. The method according to claim 11, wherein the determining, by the terminal, the DRB mapping manner according to indication information transmitted by a network device comprises one or a combination of the following:
when the DRB is being established, receiving, by the terminal, a first indication information from the network device, and determining, by the terminal, the DRB mapping manner according to the first indication information, wherein the first indication information indicates the DRB mapping manner of the terminal;
after the DRB has been established, receiving, by the terminal, a second indication information from the network device and determining, by the terminal, the DRB mapping manner according to the second indication information, wherein the second indication information indicates the DRB mapping manner which is reconfigured for the terminal by the network device; and
after the terminal has switched to a target network device, receiving, by the terminal, a third indication information sent by the target network device and determining, by the terminal, the DRB mapping manner according to the third indication information, wherein the third DRB mapping manner indicates the DRB mapping manner which is reconfigured by the target network device for the terminal.

14. The method according to claim 9, wherein after the determining, by the terminal, a DRB mapping manner, the method further comprises:
sending, by the terminal, a buffer status report, BSR, to a network device, wherein the BSR carries an amount of data to be transmitted of the DRB, and the DRBs corresponding to all logic channels of a logical channel group have the same or different mapping manners;
if the DRBs corresponding to logical channels of a logical channel group have different mapping manners, then the BSR sent by the terminal indicates a category of the BSR, wherein the category of the BSR comprises a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB allowed to be mapped onto a licensed frequency band carrier and onto an unlicensed frequency band carrier.

15. The method according to claim 9, wherein after the determining, by the terminal, a DRB mapping manner, the method further comprises:
determining, by the terminal a priority of the logical channel corresponding to the DRB; and
allocating, by the terminal, resources for the logical channel corresponding to the DRB according to the priority, wherein if the logical channel corresponding to the DRB is allowed to be mapped onto a licensed frequency band carrier and an unlicensed frequency band carrier, then unlicensed frequency carrier resources is given preference to be allocated to the DRB.

16. A network device, comprising:
a processing module, configured to determine a DRB mapping manner, wherein the DRB mapping manner refers to whether a DRB is allowed to be mapped onto a licensed frequency band carrier and/or whether a DRB is allowed to be mapped onto an unlicensed frequency band carrier; and
a transmitting module, configured to send service data of the DRB on a designated carrier according to determined DRB mapping manner.

17. The network device according to claim 16, wherein DRB mapping manners comprise a first mapping manner and a second mapping manner, wherein
in the first mapping manner, the DRB is only allowed to be mapped onto a licensed frequency band; and
in the second mapping manner, the DRB is allowed to be mapped onto a licensed frequency band, and onto an unlicensed frequency band.

18. The network device according to claim 16, wherein the processing module is further configured to:
determine a DRB mapping manner according to a quality of service, QoS, feature and/or a radio link control, RLC, transmission mode of the DRB; or
follow a pre-agreed DRB mapping manner.

19. The network device according to claim 18, wherein the processing module is further configured to:
if the RLC mode of the DRB is a Unacknowledged Mode, UM, determine that the DRB is only allowed to be mapped onto a licensed frequency band carrier; and
if the RLC mode of the DRB is an Acknowledged Mode, AM, determine that the DRB is allowed to be mapped onto a licensed frequency band carrier and is allowed to be mapped onto an unlicensed frequency band carrier.

20. The network device according to claim 16, wherein the processing module is further configured to:
when the DRB is being established, determine the mapping manner of established DRB, according to a quality of service, QoS, feature and/or a radio link control, RLC, transmission mode of the DRB;
after the DRB has been established, re-determine and configure the mapping manner of the established DRB, according to a signal interference and/or a reception of transmission service; and
when the network device is used as a switching target network device, re-determine and configure the DRB mapping manner of a switching terminal.

21. The network device according to any of the claims 16-20, the processing module is further configured to:
indicate the mapping manner of the DRB for a terminal which has established the DRB.

22. The network device according to claim 21, wherein the processing module is further configured to:
indicate the mapping manner of the DRB via a radio resource control, RRC, signaling for a terminal which has established the DRB; wherein
the RRC signaling comprises a first DRB list and a second DRB list, wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

23. The network device according to claim 16, wherein the network device further comprises:
a receiving module, configured to receive a buffer status report, BSR, sent by a terminal, wherein the BSR carries an amount of data to be transmitted of the DRB, and the DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprise a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB allowed to be mapped onto a licensed frequency band carrier and onto an unlicensed frequency band carrier.

24. A terminal, the terminal comprising:
a processing module, configured to determine a DRB mapping manner, wherein the DRB mapping manner refers to whether a DRB is allowed to be mapped onto a licensed frequency band carrier and/or is allowed to be mapped onto an unlicensed frequency band carrier; and
a transmitting module, configured to transmit service data of the DRB on a designated carrier according to the determined DRB mapping manner.

25. The terminal according to claim 24, wherein DRB mapping manners comprise a first mapping manner and a second mapping manner; wherein
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

26. The terminal according to claim 24, wherein the processing module is further configured to:
determine the DRB mapping manner according to indication information transmitted by a network device, wherein the indication information indicate the DRB mapping manner of the terminal, or,
follow a pre-agreed DRB mapping manner.

27. The terminal according to claim 26, wherein the terminal further comprises:
a receiving module, configured to receive the indication information via a radio resource control, RRC, signaling; wherein
the RRC signaling comprises a first DRB list and a second DRB list; wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

28. The terminal according to claim 26, wherein the processing module is further configured to:
when the DRB is being established, determine the DRB mapping manner according to a first indication information sent by the network device, wherein the first indication information indicates the DRB mapping manner of the terminal;
after the DRB has been established, determine the DRB mapping manner according to a second indication information sent by the network device, wherein the second indication information indicates the DRB mapping manner which is reconfigured for the terminal by the network device; and
after the terminal has switched to a target network device, determine the DRB mapping manner according to a third indication information sent by the target network device, wherein the third DRB mapping manner indicates the DRB mapping manner which is reconfigured by the target network device for the terminal.

29. The terminal according to claim 24, wherein the transmitting module is further configured to:
send a buffer status report, BSR, to a network device, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprises a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB allowed to be mapped onto a licensed frequency band carrier and onto an unlicensed frequency band carrier.

30. The terminal according to claim 24, wherein the processing module is further configured to:
determine a priority of the logical channel corresponding to the DRB; and
allocate resources for the logical channel corresponding to the DRB according to the priority, wherein if the logical channel corresponding to the DRB is allowed to be mapped onto a licensed frequency band carrier and an unlicensed frequency band carrier, then unlicensed frequency carrier resources is given preference to be allocated to the DRB.

31. A network device, comprising:
a processor, configured to read instructions in a memory to perform a following operation:
determining a DRB mapping manner, wherein the DRB mapping manner refers to whether a DRB is allowed to be mapped onto a licensed frequency band carrier and/or whether a DRB is allowed to be mapped onto an unlicensed frequency band carrier; and
a transceiver, configured to transmit and receive data under control of the processor.

32. The network device according to claim 31, wherein DRB mapping manners comprise a first mapping manner and a second mapping manner, wherein
in the first mapping manner, the DRB is only allowed to be mapped onto a licensed frequency band; and
in the second mapping manner, the DRB is allowed to be mapped onto a licensed frequency band, and onto an unlicensed frequency band.

33. The network device according to claim 31, wherein the processor is further configured to perform following operations:
determining a DRB mapping manner according to a quality of service, QoS, feature and/or a radio link control, RLC, transmission mode of the DRB; or
following a pre-agreed DRB mapping manner.

34. The network device according to claim 33, wherein the processor is further configured to perform following operations:
if the RLC mode of the DRB is a Unacknowledged Mode, UM, determining that the DRB is only allowed to be mapped onto a licensed frequency band carrier; and
if the RLC mode of the DRB is an Acknowledged Mode, AM, determining that the DRB is allowed to be mapped onto a licensed frequency band carrier and is allowed to be mapped onto an unlicensed frequency band carrier.

35. The network device according to claim 31, wherein the processor is further configured to perform following operations:
when the DRB is being established, determining the mapping manner of established DRB, according to a quality of service, QoS, feature and/or a radio link control, RLC, transmission mode of the DRB;
after the DRB has been established, re-determining and configuring the mapping manner of the established DRB, according to a signal interference and/or a reception of transmission service; and
when the network device is used as a switching target network device, re-determining and configuring the DRB mapping manner of a switching terminal.

36. The network device according to any of the claims 31 to 35, wherein the processor is further configured to perform the following operation:
indicating the mapping manner of the DRB for a terminal which has established the DRB.

37. The network device according to claim 36, wherein the processor is further configured to perform following operation:
indicating the mapping manner of the DRB via a radio resource control, RRC, signaling for a terminal which has established the DRB; wherein
the RRC signaling comprises a first DRB list and a second DRB list, wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

38. The network device according to claim 31, wherein the transceiver is further configured to:
receive a buffer status report, BSR, sent by a terminal, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprise a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB allowed to be mapped onto a licensed frequency band carrier and onto an unlicensed frequency band carrier.

39. A terminal, comprising a processor and a transceiver, wherein
the processor is configured to read instructions in a memory to perform following operations: determining a DRB mapping manner, wherein the DRB mapping manner refers to whether a DRB is allowed to be mapped onto a licensed frequency band carrier and/or is allowed to be mapped onto an unlicensed frequency band carrier; and transmitting service data of the DRB on a designated carrier via the transceiver according to determined DRB mapping manner.

40. The terminal according to claim 39, wherein DRB mapping manners comprise a first mapping manner and a second mapping manner; wherein
in the first mapping manner, a DRB is only allowed to be mapped onto a licensed frequency band carrier; and
in the second mapping manner, a DRB is allowed to be mapped onto a licensed frequency band carrier and is allowed to be mapped onto an unlicensed frequency band carrier.

41. The terminal according to claim 39, wherein the processor is further configured to perform the following operations:
determining the DRB mapping manner according to indication information transmitted by a network device, wherein the indication information indicate the DRB mapping manner of the terminal, or,
following a pre-agreed DRB mapping manner.

42. The terminal according to claim 41, wherein the transceiver is further configured to:
receive the indication information via a radio resource control, RRC, signaling; where
the RRC signaling comprises a first DRB list and a second DRB list; wherein a DRB of the first DRB list is allowed to be mapped onto a licensed band frequency carrier and onto an unlicensed band frequency carrier, and a DRB of the second DRB list is not allowed to be mapped onto an unlicensed band frequency carrier.

43. The terminal according to claim 41, wherein the processor is further configured to perform following operations:
when the DRB is being established, determining the DRB mapping manner according to a first indication information sent by the network device, wherein the first indication information indicates the DRB mapping manner of the terminal;
after the DRB has been established, determining the DRB mapping manner according to a second indication information sent by the network device, wherein the second indication information indicates the DRB mapping manner which is reconfigured for the terminal by the network device; and
after the terminal has switched to a target network device, determining the DRB mapping manner according to a third indication information sent by the target network device, wherein the third DRB mapping manner indicates the DRB mapping manner which is reconfigured by the target network device for the terminal.

44. The terminal according to claim 39, wherein the transceiver is further configured to:
send a buffer status report, BSR, to a network device, wherein the BSR carries an amount of data to be transmitted of the DRB, and DRBs corresponding to all logic channels of a logical channel group have the same or different mapping manners;
if the DRBs corresponding to logical channels of a logical channel group have different mapping manners, then a BSR sent by the terminal indicates a category of the BSR, wherein the category of BSR comprises a first category and a second category, in a BSR of the first category, the DRB corresponding to logical channel comprised in a logical channel group is only allowed to be mapped onto a licensed frequency band carrier, while in a BSR of the second category, the DRB corresponding to logical channel comprised in a logical channel group comprises at least a DRB allowed to be mapped onto a licensed frequency band carrier and onto an unlicensed frequency band carrier.

45. The terminal according to claim 39, wherein the processor is further configured to perform the following operations:
determining a priority of the logical channel corresponding to the DRB; and
allocating resources for the logical channel corresponding to the DRB according to the priority, wherein if the logical channel corresponding to the DRB is allowed to be mapped onto both a licensed frequency band carrier and an unlicensed frequency band carrier, then unlicensed frequency carrier resources is given preference to be allocated to the DRB.
